# EUROPEAN PATENT SPECIFICATION

(11) **EP 1 319 591 B1**
(45) Date of publication and mention of the grant of the patent: **10.12.2008**
(21) Application number: 02027960.0
(22) Date of filing: 13.12.2002
(51) Int. Cl.: B62K 19/46, B62J 11/00

(54) **Straddle type of vehicle**
Im Grätschsitz zu benutzendes Fahrzeug
Véhicule du type monté a califourchon

(30) Priority: 14.12.2001 JP 2001381852
(43) Date of publication of application: 18.06.2003
(73) Proprietor: Yamaha Hatsudoki Kabushiki Kaisha, Iwata-shi, Shizuoka-ken (JP)
(72) Inventor: Shunichi, Itajiki, c/o Yamaha Hatsudoki Kabushiki Kaisha, Iwata-shi, Shizuoka-ken (JP)
(74) Representative: Grünecker, Kinkeldey, Stockmair & Schwanhäusser Anwaltssozietät

(56) References cited:
- EP-A- 0 404 194
- EP-A- 0 463 942
- US-A- 4 964 483
- US-A- 5 433 286

## Description

The invention relates to a straddle type of vehicle as defined in the preamble of claim 1. US-A-5,433,286 shows such a vehicle..

The internal combustion engine of a conventional straddle type of vehicle comprises a crankcase and a cylinder protruding forward from the crankcase, and is provided with an intake pipe extending upward toward the rear from the top face side of the cylinder, and a fuel injection valve disposed above the cylinder and supplying fuel to the cylinder.

When driving the vehicle, a rider sits on the seat and fuel is supplied to the cylinder through the fuel injection valve. Then, the fuel supplied to the cylinder is used for combustion and the internal combustion engine outputs driving force by which the rear wheel is driven, allowing the vehicle to run on the road surface.

While the vehicle is running, road shocks received by the rear wheel are reduced by updown swings of the rear wheel together with the rear arm.

Since the intake pipe extends upward toward the rear from the top face side of the cylinder in the internal combustion engine, and the fuel injection valve is affixed to the intake pipe above the cylinder and tends to significantly protrude upward from the cylinder side, the fuel injection valve is likely to contact the storage box positioned there above.

To overcome this problem, it has been considered that the storage box could be made smaller in order to prevent the fuel injection valve from contacting the storage box. However, this would result in decreased capacity in the storage box, which is undesirable. Alternatively, the storage box could be wholly positioned higher to avoid the contact so as to maintain desired capacity. However, this would cause the upper face of the seat disposed on the storage box to be too high, and consequently a problem of poor contact of the rider's feet on the road surface when sitting on the seat.

The present invention has been made in view of the situation described above and it is an object of the invention to provide a straddle type of vehicle comprising a storage box having sufficient capacity while allowing good contact of the rider's feet on the road surface when sitting on the seat in the case that the seat is disposed on the upper face side of the storage box.

For a storage box of the above kind, this objective is solved by the features of claim 1. Further preferred embodiments are subject to the subclaims..

The straddle type of vehicle, is provided with a rear arm disposed in the rear of a vehicle body frame comprised in a vehicle body and having a forward side pivotably supported with the vehicle body frame such that the rear side can swing up and down, a rear wheel supported at the rear end of the rear arm, a storage box disposed above the forward part of the rear arm and supported with the vehicle body frame, a seat disposed on the upper face side of the storage box, and an internal combustion engine constituting the forward part of the rear arm and outputting driving force to the rear wheel.

The internal combustion engine comprises a crankcase and a cylinder protruding forward from the crankcase, and is provided with an intake pipe extending upward toward the rear from the top face side of the cylinder, and a fuel injection valve disposed above the cylinder and supplying fuel to the cylinder.

When driving the vehicle, a rider sits on the seat and fuel is supplied to the cylinder through the fuel injection valve. Then, the fuel supplied to the cylinder is used for combustion and the internal combustion engine outputs driving force by which the rear wheel is driven, allowing the vehicle to run on the road surface.

While the vehicle is running, road shocks received by the rear wheel are reduced by updown swings of the rear wheel together with the rear arm.

Accordingly, a straddle type of vehicle is provided with a rear arm 8 disposed in the rear of a vehicle body frame 3 and having a forward side pivotably supported with the vehicle body frame 3 such that the rear side can swing up and down, a rear wheel 9 supported at the rear end of the rear arm 8, a storage box 12 disposed above the forward part of the rear arm 8 and supported with the vehicle body frame 3, a seat 13 disposed on the upper face side of a storage box 12, an internal combustion engine 22 constituting the forward part of the rear arm 8 and outputting driving force to the rear wheel 9, and a fuel injection valve 36 disposed above the internal combustion engine 22 and supplying fuel 35 to the internal combustion engine 22.

Moreover, the storage box 12 is formed across a first space 42 above the fuel injection valve 36 and second spaces 43, 44 forward and/or rearward of the fuel injection valve 36, and a bottom plate 16 in parts 47, 48 of the storage box 12 that is positioned in the second spaces 43, 44 is inclined upward toward the rear.

Further, lowest parts 47a, 48a of the parts 47, 48 of the storage box 12 that are positioned in the second spaces 43, 44 are positioned lower than the uppermost part of the fuel injection valve 36.

In the following, description will be made of a preferred embodiment of the invention with reference to drawings, wherein:

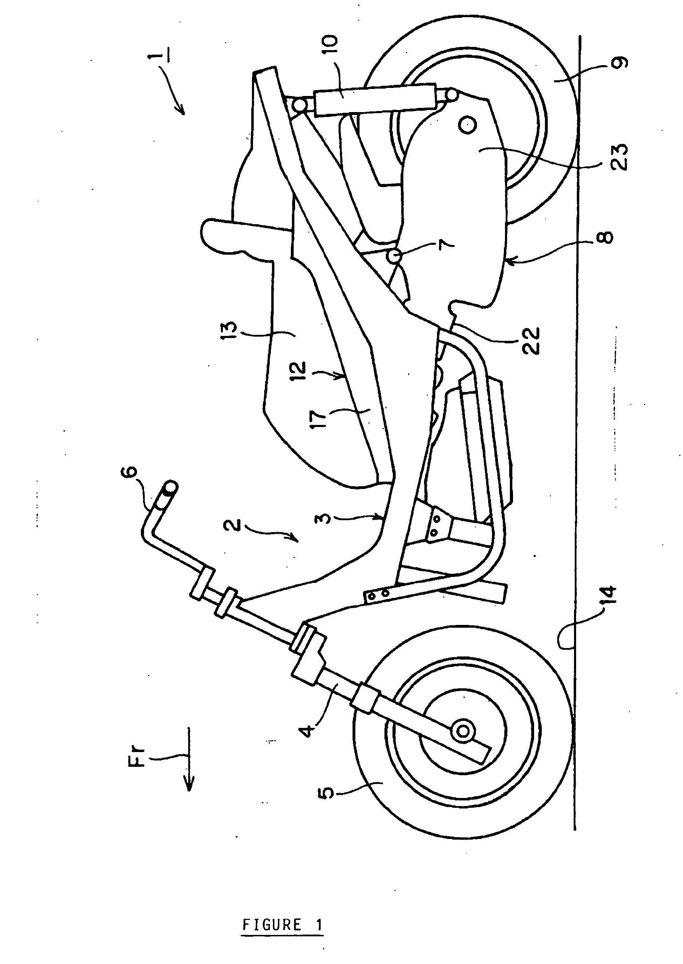

- Fig. 1: is an overall side elevational view of a straddle type of vehicle according to a preferred embodiment of the invention;

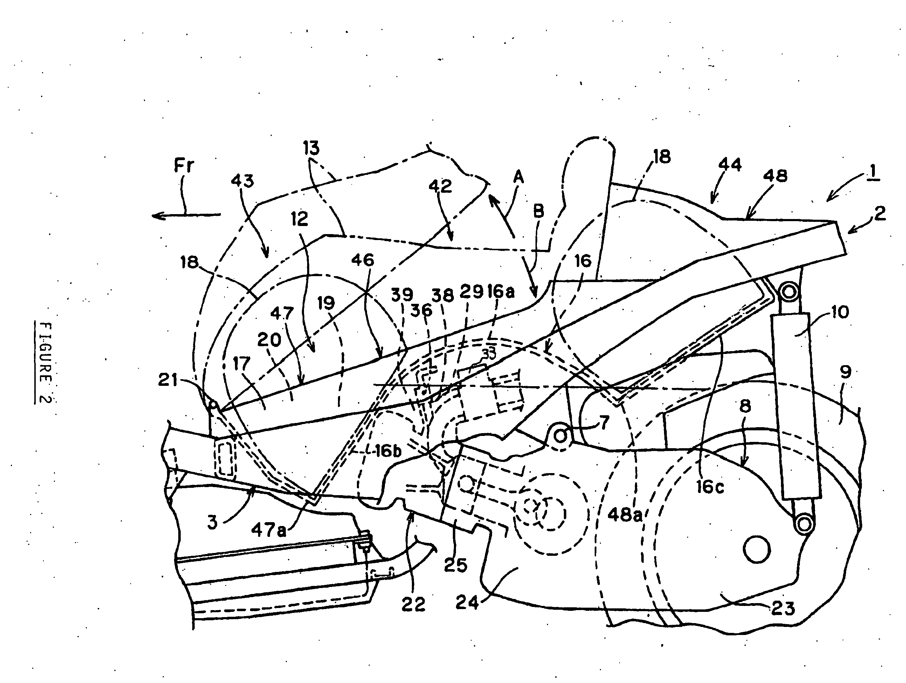

- Fig. 2: is an enlarged view of a part of the vehicle shown in Fig. 1;

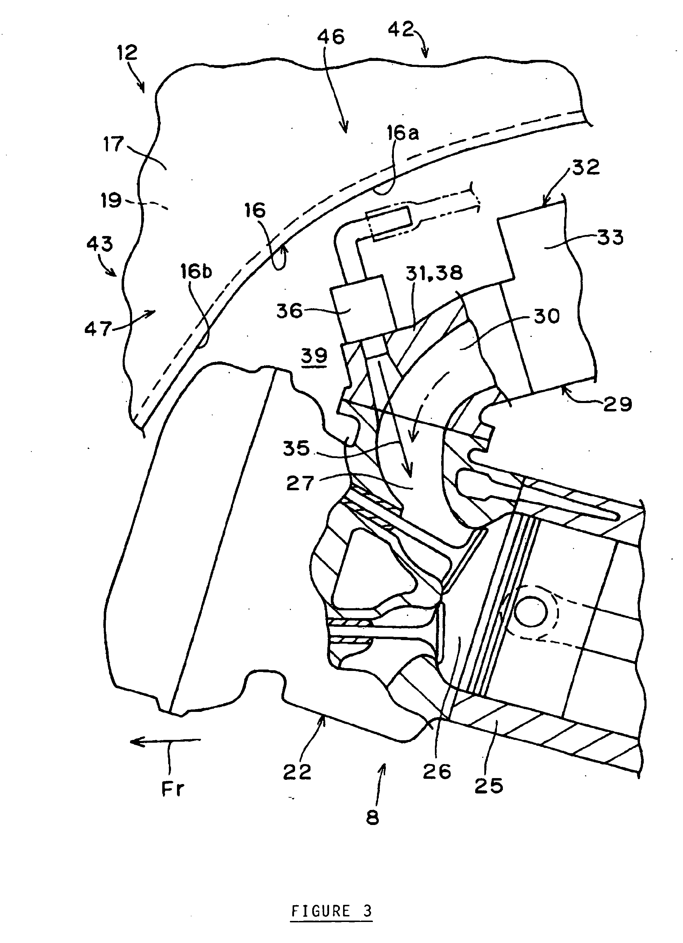

- Fig. 3: is an enlarged cross-sectional view of a part of the vehicle shown in Fig. 2; and
- Fig. 4: is an enlarged cross-sectional view of a part of the vehicle shown in Fig. 2, showing a lock arrangement of the seat.

In the drawings, numeral reference 1 shows a straddle type of vehicle such as a scooter and the arrow Fr shows the forward direction of the vehicle 1.

In the vehicle 1, the vehicle body 2 comprises: a vehicle body frame 3 constituting a skeleton framework of the vehicle body 2; a front fork 4 steerably supported at the front end of the vehicle body frame 3; a front wheel 5 rotatably supported at the lower ends of the front fork 4; handlebars 6 supported at the upper end of the front fork 4; a rear arm 8 disposed in the rear of the vehicle body frame 3 to extend in the longitudinal direction of the vehicle and having the forward side supported with the vehicle body frame 3 by means of a pivotably supporting shaft 7 such that the rear side can swing up and down; a rear wheel 9 rotatably supported at the rear end (swinging end) of the rear arm 8; and a shock absorber 10 resiliently supporting the rear end of the rear arm 8 at the rear end of the vehicle body frame 3.

In the vehicle 1, the vehicle body 2 also comprises: a storage box 12 made of resin, which is disposed immediately above the forward part of the rear arm 8 and supported with the rear part of the vehicle body frame 3; and an openable seat 13 disposed on the upper face side of the storage box 12. The vehicle body 2 is supported on the road surface 14 with the front and rear wheels 5, 9.

The storage box 12 comprises: a bottom plate 16 extending immediately above the forward part of the rear arm 8 in the longitudinal direction of the vehicle; and side plates 17 extending upward integrally from the outer periphery of the bottom plate 16 and formed into a rectangular shape in the plan view of the vehicle body 2. Inner space of the storage box 12 enclosed by the bottom plate 16 and side plates 17 is designed as a storage space 19 for items (e.g. a helmet) 18. The storage space 19 is opened above the storage box 12 through an opening 20 formed at the upper end of the storage box 12 so that the items 18 can be stored in the storage space 19 and accessed through the opening 20.

The seat 13 has its forward end pivotably supported at the forward upper end of the storage box 12 with a hinge 21 such that its rear side can rotate upward and downward (A, B) about the hinge. The rotation (A, B) of the seat 13 about the hinge 21 allows the storage box 12 to be opened upward at the opening 20.

The forward part of the rear arm 8 is constituted by a four-stroke internal combustion engine 22 for outputting driving force to the rear wheel 9. The rear arm 8 supports the rear wheel 9 at its rear part which is constituted by a transmission 23 engaging the rear wheel 9 with the internal combustion engine 22.

The internal combustion engine 22 comprises: a crankcase 24 supported with the vehicle body frame 3 by the pivotably supporting shaft 7; and a cylinder 25 protruding upward and forward from the crankcase 24. Inside the cylinder 25 is formed a combustion chamber 26. An intake passage 27 is also formed to allow the combustion chamber 26 to communicate with a part above the top face of the cylinder 25.

An intake pipe 29, extending upward toward the rear from the top face side of the cylinder 25, is provided. The passage inside the intake pipe 29 is designed as an intake passage 30 to allow the intake passage 27 in the cylinder 25 to communicate with the air. The intake pipe 29 comprises: an intake pipe body 31 having one end affixed to the top face of the cylinder 25 and the other end first extending upward from the top face side of the cylinder 25 and then curving toward the rear; and a valve box (throttle body) 33 for a throttle valve 32 attached to the extending end of the intake pipe body 31.

A fuel injection valve 36, disposed above the forward part of the cylinder 25 in the internal combustion engine 22 and supplying fuel 35 to the combustion chamber 26 in the cylinder 25, is provided. The fuel injection valve 36 is affixed to the intake pipe body 31 in the intake pipe 29 and injects the fuel 35 downward generally in the perpendicular direction so as to be supplied to the combustion chamber 26 through the respective intake passages 27, 30 in the cylinder 25 and intake pipe 29.

In the side view (each drawing) of the vehicle body 2, at least one part or the lower end side of the fuel injection valve 36 is disposed in a space 39 longitudinally created between the protruding end (forward end) of the cylinder 25 and the intake pipe body 31, that is, the end 38 on the cylinder 25 side in the intake pipe 29.

The storage box 12 is formed across a first space 42 above the fuel injection valve 36 and second spaces 43, 44 forward and rearward of the fuel injection valve 36. Therefore, the storage space 19 in the storage box 12 is created in the longitudinal direction of the vehicle so that long items can be housed.

A first part 16a of the bottom plate 16 in a first part 46 of the storage box 12, which is positioned in the first space 42 is formed into an arc-shaped and upwardly curved face. In addition, each of the second parts 16b, 16c of the bottom plate 16 in the respective second parts 47, 48 of the storage box 12 that is positioned in the second spaces 43, 44 is inclined so as to linearly extend upward toward the rear.

The forward end of the first part 16a of the bottom plate 16 and the rear end of the second part 16b in the forward part of the bottom plate 16 are integrally connected to each other so as to be smoothly continuous. In addition, the rear end of the first part 16a of the bottom plate 16 and the forward end of the second part 16c in the rear part of the bottom plate 16 are integrally connected to each other at a large angle of approximately 90°.

Lowest parts 47a, 48a of the respective second parts 47, 48 of the storage box 12 that are positioned in the second spaces 43, 44 are positioned lower than any of the halfwaysections in the vertical direction of the fuel injection valve 36.

The second part 16b constituting the forward part of the bottom plate 16 in the storage box 12 is wholly positioned immediately forward of the protruding end of the cylinder 25. The rear end of the second part 16b is positioned immediately above the fuel injection valve 36. In addition, the forward end of the second part 16b is designed as the lowest part 47a, which allows the storage space 19 of the second part 47 constituting the forward part in the storage box 12 to maintain sufficient capacity.

The second part 16c constituting the rear part of the bottom plate 16 in the storage box 12 is wholly positioned immediately above the clearance space of the rear wheel 9. The forward end of the second part 16c is designed as the lowest part 48a, which allows the storage space 19 of the second part 48 constituting the rear part of the storage box 12 to maintain sufficient capacity.

In the storage space 19 created in each of the second parts 47, 48, the items 18 or helmets are housed respectively. Each of the items 18 is housed in the storage space 19 so as to be stored and accessed through the opening 20 opened by the upward rotation A of the seat 13.

Incidentally, the above descriptions are based on the examples shown in the drawings. However, the storage box 12 may be formed across the first space 42 and either of the forward or rear second spaces 43, 44.

According to the above constitution, in the side view of the vehicle body 2, at least one part of the fuel injection valve 36 is disposed in the space 39 created between the protruding end of the cylinder 25 and the end 38 on the cylinder 25 side in the intake pipe 29.

Thus, the extra space 39 created between the protruding end of the cylinder 25 and the end 38 in the intake pipe 29 is used to house the fuel injection valve 36 so that the fuel injection valve 36 is prevented from significantly protruding upward from the top face side of the cylinder 25.

Therefore, unless the storage box 12, disposed above the fuel injection valve 36 for supplying the fuel 35 to the internal combustion engine 22, has to be wholly positioned higher, the storage box 12 can prevent the fuel injection valve 36 from contacting while maintaining sufficient capacity in the storage box 12. In addition, since the storage box 12 does not have to be positioned so high, good contact of the rider's feet on the road surface is maintained when sitting on the seat 13 disposed on the upper face side of the storage box 12.

Also, as described above, the storage box 12 is formed across the first space 42 above the fuel injection valve 36 disposed above the internal combustion engine 22 and the second spaces 43, 44 forward and/or rearward of the fuel injection valve 36. The second parts 16b, 16c of the bottom plate 16 in the second parts 47, 48 of the storage box 12 that are positioned in the second spaces 43, 44 are inclined upward toward the rear.

Thus, if the second part 16b of the bottom plate 16 in the second part 47 of the storage box 12 that is positioned in the second space 43 forward of the fuel injection valve 36 is inclined upward toward the rear, it allows the rear end side of the second part 16b of the bottom plate 16 to be positioned immediately above the fuel injection valve 36. In such case, the storage box 12 is prevented from being positioned higher and still maintains sufficient capacity while allowing good contact of the rider's feet on the road surface.

In addition, if the second part 16c of the bottom plate 16 in the second part 48 of the storage box 12 that is positioned in the second space 44 rearward of the fuel injection valve 36 is inclined upward toward the rear, it allows the second part 16c of the bottom plate 16 to be positioned immediately above the clearance space of the rear wheel 9. In such case, contact with the rear wheel 9 is avoided, and the storage box 12 is prevented from being positioned higher and still maintains sufficient capacity while allowing good contact of the rider's feet on the road surface.

Furthermore, if the storage box 12 is wholly formed across the first space 42 and each of the second spaces 43, 44, the storage space 19 in the storage box 12 is formed in the longitudinal direction of the vehicle so that long items can be housed.

Also, as described above, the lowest parts 47a, 48a of the second parts 47, 48 of the storage box 12 that are positioned in the second spaces 43, 44 are positioned lower than the uppermost part of the fuel injection valve 36.

Thus, the second spaces 43, 44 forward and/or reward of the storage box 12 are more effectively used so that the capacity in the storage box 12 can be increased.

Therefore, the storage box 12 is prevented from being positioned higher and still maintains sufficient capacity while allowing good contact of the rider's feet on the road surface.

Incidentally, the fuel injection valve 36 may be affixed to the cylinder 25 although it is not shown in the drawings. In addition, in one of the second parts 47, 48 positioned forward or rearward of the storage box 12 may be placed the items 18 or a single helmet and in the other second part may also be placed the other helmet.

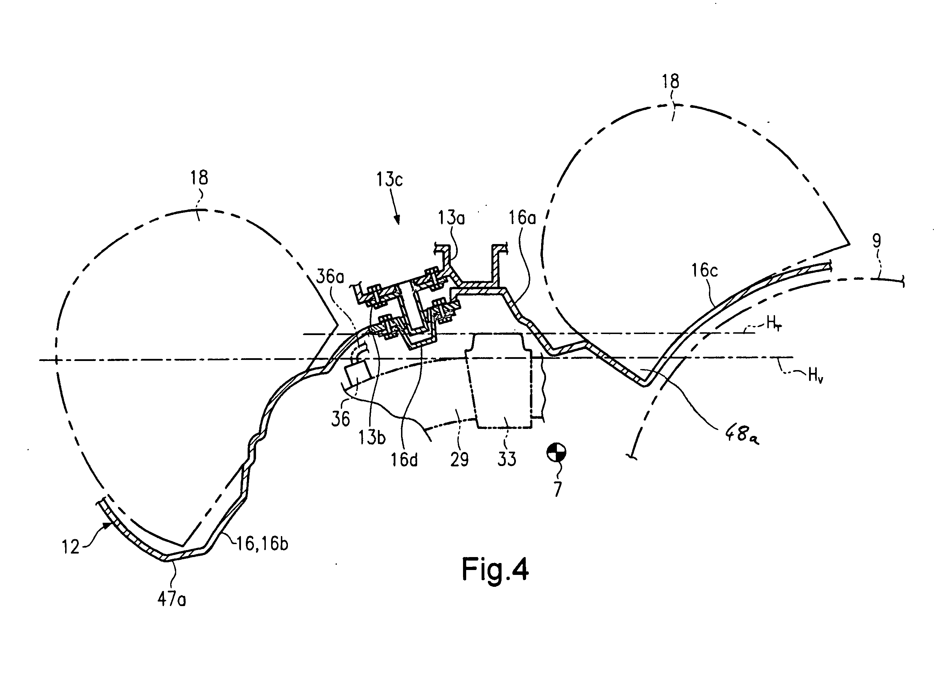

Fig. 4 discloses a further detail of a straddle type of vehicle, as described before. The storage box 12 comprises said bottom plate 16 having a first portion 16a being arranged about in the middle between second portions 16b, 16c wherein said second portions 16b, 16c are formed to receive relatively large items 18 such as helmets to be placed in the storage box 12. At said first part 16a of the bottom plate 16, a lock holder 16d may be located. Said lock holder 16d is capable of receiving and locking a lock 13b which is arranged at a bottom plate 13a of the seat 13 which can be used to close the storage box 12. The lock 13b and the lock holder 16d form together a lock structure 13c, both elements of the lock structure 13b may be manufactured individually and then attached separately to the bottom plate of the seat and to the bottom plate of the storage box by connection means such as screws or the like, respectively.

Hereby, the arrangement of the lock holder 16d to the first part 16a of the bottom plate 16 of the storage box 12 is chosen in a way that the fuel injection valve 36 is located on one side (front side or left side in Fig. 4) of said lock holder 16d while said throttle body 33 is located on the other side (rear side or right side) of said lock holder 16d.

The lock holder is set to the bottom plate 36 sticking out downwardly from the bottom plate of the storage box 12. Since the lock holder is placed in a lower position without obstructing any functions of the fuel injection valve or the throttle body which are located separately on either side of the lock holder 16d, a large space for containing items is created. By this arrangement of the fuel injection valve 36, the throttle body 33 and the lock holder 16d, an additionally large capacity is created in the center area of the storage box above the first portion 16a of the bottom plate 16.

Fig. 4 further pictures by means of a broken one-dotted line H_{V} a horizontal line at which the highest part of the fuel injection valve 36 is positioned. Further, by means of a broken two-dotted line H_{T} a horizontal line is shown at which the top surface of the throttle body 33 is positioned. It can be seen that the lowest portions 47a and 48a of a first space 43 and a second space 44 of the storage box 12 are positioned well below the top surface of the throttle body 33 as well as of the fuel injection valve 36. It can be further seen that the highest position of the rear wheel 9 is located above the lock holder 16d as well as above the lowest positions 47a and 48a. The first lowest position 47a of the first space 43 of the storage box 12 is even located below the supporting shaft 7 pivotably supporting the rear arm 8 with respect to the vehicle body frame 3.

The straddle type of vehicle comprises a storage system provided with a rear arm disposed in the rear of a vehicle body frame and having a forward side pivotably supported with the vehicle body frame such that the rear side can swing up and down, a rear wheel supported at the rear end of the rear arm, a storage box disposed above the forward part of the rear arm and supported with the vehicle body frame, a seat disposed on the upper face side of the storage box, an internal combustion engine constituting the forward part of the rear arm and outputting driving force to the rear wheel, and a fuel injection valve disposed above the internal combustion engine and supplying fuel to the internal combustion engine;
wherein the storage box is formed across a first space above the fuel injection valve, and second spaces forward and/or rearward of the fuel injection valve, and a bottom plate in parts of the storage box that is positioned in the second spaces is inclined upward toward the rear.

Thus, if the bottom plate in the second part of the storage box that is positioned in the second space forward of the fuel injection valve is inclined upward toward the rear, it allows the rear end side of the bottom plate to be positioned immediately above the fuel injection valve. In such case, unless the storage box has to be wholly positioned higher, the storage box can prevent the fuel injection valve from contacting while maintaining sufficient capacity in the storage box. In addition, since the storage box is prevented from being positioned so high, good contact of the rider's feet on the road surface is allowed when sitting on the seat disposed on the upper face side of the storage box.

In addition, if the bottom plate in the second part of the storage box that is positioned in the second space rearward of the fuel injection valve is inclined upward toward the rear, it allows the bottom plate to be positioned immediately above the clearance space of the rear wheel. In such case, contact with the rear wheel is avoided, and the storage box is prevented from being positioned higher and still maintains sufficient capacity while allowing good contact of the rider's feet on the road surface.

Furthermore, if the storage box is wholly formed across the first space and each of the second spaces, the storage space in the storage box is formed in the longitudinal direction of the vehicle so that long items can be housed.

Furthermore, lowest parts of the parts of the storage box that are positioned in the second spaces are positioned lower than the uppermost part of the fuel injection valve.

Thus, the second spaces forward and/or reward of the storage box are more effectively used so that the capacity in the storage box can be increased.

Therefore, the storage box is prevented from being positioned higher and still maintains sufficient capacity while allowing good contact of the rider's feet on the road surface.

To maintain sufficient capacity in a storage box while allowing good contact of rider's feet on a road surface when sitting on a seat, it is proposed to provide a rear arm 8 pivotably supported with a vehicle body frame 3, a rear wheel 9 supported at the rear end of the rear arm 8, a storage box 12 disposed above the forward part of the rear arm 8 and supported with the vehicle body frame 3, a seat 13 disposed on the upper face side of the storage box 12, an internal combustion engine 22 constituting the forward part of the rear arm 8 and outputting driving force to the rear wheel 9, and a fuel injection valve 36 disposed above the internal combustion engine 22 and supplying fuel 35 to the internal combustion engine 22 are provided. The storage box 12 is formed across a first space 42 above the fuel injection valve 36 and second spaces 43, 44 forward and/or rearward of the fuel injection valve 36, and a bottom plate 16 in parts 47, 48 of the storage box 12 that is positioned in the second spaces 43, 44 is inclined upward toward the rear.

## Claims

1. Straddle type of vehicle comprising:
a vehicle body frame (3),
a storage box (12) being supported by the vehicle body frame (3), wherein at least
a portion (16b,16c) of a bottom plate (16) of the storage box (12) is inclined upward to a rear side of the vehicle (1), and
a rear arm (8) being pivotably connected to the vehicle body frame (3) and
supporting an internal combustion engine (22) and a rear wheel (9),
**characterized in that**
the storage box (12) is located across a first space (42) above a fuel injection valve (36) and at at least one second space (43,44) forward and/or rearward of the fuel injection valve (36), which is disposed above the engine (22), and a top surface of a throttle body (33) of the vehicle is positioned higher than a highest part of the fuel injection valve (36).

2. Straddle type of vehicle according to claim 1, **characterized in that** lowest parts (47a,48a) of said portion (16a,16b) of the bottom plate (16) are positioned in said second space (43,44).

3. Straddle type of vehicle according to claim 1 or 2, **characterized in that** said fuel injection valve (36) and a throttle body (33) are positioned separately on differing sides a lock holder (16d) arranged at said bottom plate (16).

4. Straddle type of vehicle according to claim 2 or 3, **characterized in that** said lowest parts (47a,48a) are positioned lower than an uppermost part of the fuel injection valve (36).

5. Straddle type of vehicle according to one of the claims 1 to 4, **characterized in that** the bottom plate (16) of the storage box (12) extends immediately above the forward part of the rear arm (8) in the longitudinal direction of the vehicle, while side plates (17) of the storage box (12) extend upward integrally from the outer periphery of the bottom plate (16) and are formed into a rectangular shape in the plan view of the vehicle body (2).

6. Straddle type of vehicle according to one of the claims 1 to 5, **characterized in that** an inner space of the storage box (12) enclosed by the bottom plate (16) and by side plates (17) is designed as a storage space (19) for items (18) such as at least one helmet.

7. Straddle type of vehicle according to claim 6, **characterized in that** said storage box (12) comprises a storage space (19) for storing items (18) such as a helmet in said second space (43) located forward at said fuel injection valve (36).

8. Straddle type of vehicle according to claim 6 or 7, **characterized in that** said storage box (12) comprises a storage space (19) for storing items (18) such as a helmet in said second space (44) located rearward of said fuel injection valve (36).

9. Straddle type of vehicle according to one of the claims 2 to 8, **characterized in that** a part (16a) of the bottom plate (16) in a first part (46) of the storage box (12) which is positioned in the first space (42) is formed into an arc-shaped and upwardly curved face.

10. Straddle type of vehicle according to one of the claims 2 to 9, **characterized in that** at least one of the portions (16b,16c) of the bottom plate (16) of respective second parts (47,48) of the storage box (12) which are positioned in the second spaces (43,44) is inclined so as to linearly extend upward toward the rear.

11. Straddle type of vehicle according to claim 9 or 10, **characterized in that** a forward end of the part (16a) of the bottom plate (16) and a rear end of the portion (16b) in the forward part of the bottom plate (16) are integrally connected to each other so as to be smoothly continuous.

12. Straddle type of vehicle according to one of the claims 9 to 11, **characterized in that** a rear end of the part (16a) of the bottom plate (16) and a forward end of the portion (16c) in the rear part of the bottom plate (16) are integrally connected to each other at a large angle of approximately 90°.

## Patentansprüche

1. Fahrzeug vom Grätschsitz- Typ, aufweisend:
einen Fahrzeugkarosserierahmen (3),
einen Unterbringungsbehälter (12), der durch den Fahrzeugkarosserierahmen (3) gelagert ist, wobei zumindest ein Abschnitt (16b, 16c) einer Bodenplatte (16) des Unterbringungsbehälters (12) nach oben zu einer hinteren Seite des Fahrzeuges (1) geneigt ist, und
einen hinteren Arm (8), der mit dem Fahrzeugkarosserierahmen (3) schwenkbar verbunden ist und eine Brennkraftmaschine (22) und ein Hinterrad (9) lagert,
**dadurch gekennzeichnet, dass**
der Unterbringungsbehälter (12) über einem ersten Raum (42) oberhalb des Kraftstoffeinspritzventils (36) und an zumindest einem zweiten Raum (43, 44) vorwärts und / oder rückwärts des Kraftstoffeinspritzventils (36) angeordnet ist, das oberhalb des Motors (22) angeordnet ist, und eine Oberseite des Drosselkörpers (33) des Fahrzeuges höher als ein höchster Teil des Kraftstoffeinspritzventils (36) positioniert ist.

2. Fahrzeug vom Grätschsitz- Typ nach Anspruch 1, **dadurch gekennzeichnet, dass** die untersten Teile (47a, 48a) des Abschnittes (16a, 16b) der Bodenplatte (16) in dem zweiten Raum (43, 44) positioniert sind.

3. Fahrzeug vom Grätschsitz- Typ nach Anspruch 1 oder 2, **dadurch gekennzeichnet, dass** das Kraftstoffeinspritzventil (36) und ein Drosselkörper (33) separat auf verschiedenen Seiten eines Verriegelungshalters (16d), angeordnet an der Bodenplatte (16), positioniert sind.

4. Fahrzeug vom Grätschsitz- Typ nach Anspruch 2 oder 3, **dadurch gekennzeichnet, dass** die untersten Teile (47a, 48a) niedriger als ein oberstes Teil des Kraftstoffeinspritzventils (36) positioniert sind.

5. Fahrzeug vom Grätschsitz- Typ nach einem der Ansprüche 1 bis 4, **dadurch gekennzeichnet, dass** sich die Bodenplatte (16) des Unterbringungsbehälters (12) unmittelbar oberhalb des vorderen Teils des hinteren Arms (8) in der Längsrichtung des Fahrzeuges erstreckt, während sich die Seitenplatten (17) des Unterbringungsbehälters (12) nach oben einstückig von dem Außenumfang der Bodenplatte (16) erstrecken und in einer rechteckigen Form in der Draufsicht der Fahrzeugkarosserie (2) gebildet sind.

6. Fahrzeug vom Grätschsitz- Typ nach einem der Ansprüche 1 bis 5, **dadurch gekennzeichnet, dass** ein Innenraum des Unterbringungsbehälters (12), eingeschlossen durch die Bodenplatte (16) und durch Seitenplatten (17), als ein Unterbringungsraum (19) für Gegenstände (18), z. B. zumindest einen Helm, gebildet ist.

7. Fahrzeug vom Grätschsitz- Typ nach Anspruch 6, **dadurch gekennzeichnet, dass** der Unterbringungsbehälter (12) einen Unterbringungsraum (19) zum Unterbringen von Gegenständen (18), z. B. einen Helm in dem zweiten Raum (43), angeordnet nach vom des Kraftstoffeinspritzventils (36), aufweist.

8. Fahrzeug vom Grätschsitz- Typ nach Anspruch 6 oder 7, **dadurch gekennzeichnet, dass** der Unterbringungsbehälter (12) einen Unterbringungsraum (19) zum Unterbringen von Gegenständen (18), z. B. einen Helm in dem zweiten Raum (44), angeordnet nach hinten des Kraftstoffeinspritzventils (36), aufweist.

9. Fahrzeug vom Grätschsitz- Typ nach einem der Ansprüche 2 bis 8, **dadurch gekennzeichnet, dass** ein Teil (16a) der Bodenplatte (16) in einem ersten Teil (46) des Unterbringungsbehälters (12), das in dem ersten Raum (42) positioniert ist, in einer Bogenform und nach oben gekrümmter Fläche gebildet ist.

10. Fahrzeug vom Grätschsitz- Typ nach einem der Ansprüche 2 bis 9, **dadurch gekennzeichnet, dass** zumindest einer der Abschnitte (16b, 16c) der Bodenplatte (16) der jeweiligen zweiten Teile (47, 48) des Unterbringungsbehälters (12), die in den zweiten Räumen (43, 44) positioniert sind, geneigt ist, um sich geradlinig nach oben in Richtung nach hinten zu erstrecken.

11. Fahrzeug vom Grätschsitz- Typ nach Anspruch 9 oder 10, **dadurch gekennzeichnet, dass** ein vorderes Ende des Teils (16a) der Bodenplatte (16) und ein hinteres Ende des Abschnittes (16b) in dem vorderen Teil der Bodenplatte (16) miteinander einstückig verbunden sind, um glatt fortlaufend zu sein.

12. Fahrzeug vom Grätschsitz- Typ nach einem der Ansprüche 9 bis 11, **dadurch gekennzeichnet, dass** ein hinteres Ende des Teils (16a) der Bodenplatte (16) und ein vorderes Ende des Abschnittes (16c) in dem hinteren Teil der Bodenplatte (16) miteinander einstückig unter einem großen Winkel von ungefähr 90° verbunden sind.

## Revendications

1. Véhicule du type monté à califourchon comprenant :
un châssis de carrosserie de véhicule (3),
une boîte de rangement (12) supportée par le châssis de carrosserie de véhicule (3), dans lequel au moins une partie (16b, 16c) d'une plaque inférieure (16) de la boîte de rangement (12) est inclinée vers le haut jusqu'à un côté arrière du véhicule (1), et
un bras arrière (8) relié de façon pivotante au châssis de carrosserie de véhicule (3) et supportant un moteur à combustion interne (22) et une roue arrière (9),
**caractérisé en ce que**
la boîte de rangement (12) est positionnée à travers un premier espace (42) au-dessus d'une soupape d'injection de carburant (36) et au niveau d'au moins un second espace (43, 44) en avant et/ou en arrière de la soupape d'injection de carburant (36), qui est disposée au-dessus du moteur (22), et une surface supérieure d'un corps de papillon des gaz (33) du véhicule est positionnée plus haute qu'une partie la plus haute de la soupape d'injection de carburant (36).

2. Véhicule du type monté à califourchon selon la revendication 1, **caractérisé en ce que** des parties les plus basses (47a, 48a) de ladite partie (16a, 16b) de la plaque inférieure (16) sont positionnées dans ledit second espace (43, 44).

3. Véhicule du type monté à califourchon selon la revendication 1 ou 2, **caractérisé en ce que** ladite soupape d'injection de carburant (36) et un corps de papillon des gaz (33) sont positionnés séparément sur des côtés différents d'un support de verrouillage (16d) agencé au niveau de ladite plaque inférieure (16).

4. Véhicule du type monté à califourchon selon la revendication 2 ou 3, **caractérisé en ce que** lesdites parties les plus basses (47a, 48a) sont positionnées plus bas qu'une partie la plus haute de la soupape d'injection de carburant (36).

5. Véhicule du type monté à califourchon selon une des revendications 1 à 4, **caractérisé en ce que** la plaque inférieure (16) de la boîte de rangement (12) s'étend immédiatement au-dessus de la partie avant du bras arrière (8) dans la direction longitudinale du véhicule, alors que des plaques latérales (17) de la boîte de rangement (12) s'étendent vers le haut d'un seul tenant à partir de la périphérie extérieure de la plaque inférieure (16) et sont formées dans une forme rectangulaire en vue en plan de la carrosserie de véhicule (2).

6. Véhicule du type monté à califourchon selon une des revendications 1 à 5, **caractérisé en ce qu'**un espace intérieur de la boîte de rangement (12) enfermé par la plaque inférieure (16) et par des plaques latérales (17) est conçu en tant qu'espace de rangement (19) pour des articles (18) tels qu'au moins un casque.

7. Véhicule du type monté à califourchon selon la revendication 6, **caractérisé en ce que** ladite boîte de rangement (12) comprend un espace de rangement (19) pour ranger des articles (18) tels qu'un casque dans ledit second espace (43) positionné en avant au niveau de ladite soupape d'injection de carburant (36).

8. Véhicule du type monté à califourchon selon la revendication 6 ou 7, **caractérisé en ce que** ladite boîte de rangement (12) comprend un espace de rangement (19) pour ranger des articles (18) tels qu'un casque dans ledit second espace (44) positionné en arrière de ladite soupape d'injection de carburant (36).

9. Véhicule du type monté à califourchon selon une des revendications 2 à 8, **caractérisé en ce qu'**une partie (16a) de la plaque inférieure (16) dans une première partie (46) de la boîte de rangement (12) qui est positionnée dans le premier espace (42) est formée dans une face arquée et courbée vers le haut.

10. Véhicule du type monté à califourchon selon une des revendications 2 à 9, **caractérisé en ce qu'**au moins une des parties (16b, 16c) de la plaque inférieure (16) de secondes parties respectives (47, 48) de la boîte de rangement (12) qui sont positionnées dans les seconds espaces (43, 44) est inclinée, afin de s'étendre linéairement vers le haut vers l'arrière.

11. Véhicule du type monté à califourchon selon la revendication 9 ou 10, **caractérisé en ce qu'**une extrémité avant de la partie (16a) de la plaque inférieure (16) et une extrémité arrière de la partie (16b) dans la partie avant de la plaque inférieure (16) sont reliées d'un seul tenant l'une à l'autre afin d'être uniformément continues.

12. Véhicule du type monté à califourchon selon une des revendications 9 à 11, **caractérisé en ce qu'**une extrémité arrière de la partie (16a) de la plaque inférieure (16) et une extrémité avant de la partie (16c) dans la partie arrière de la plaque inférieure (16) sont reliées d'un seul tenant l'une à l'autre à un angle important d'approximativement 90°.
